# EUROPÄISCHE PATENTSCHRIFT

(11) **EP 0 803 419 B1**
(45) Veröffentlichungstag und Bekanntmachung des Hinweises auf die Patenterteilung: **19.06.2002**
(21) Anmeldenummer: 97104907.7
(22) Anmeldetag: 22.03.1997
(51) Int. Cl.: B60T 1/087, F16D 57/04

(54) **Antriebseinheit mit einem Motor und einem Retarder**
Drive unit with an engine and a retarder
Unité d'entraînement avec un moteur et un ralentisseur

(30) Priorität: 25.04.1996 DE 19616425
(43) Veröffentlichungstag der Anmeldung: 29.10.1997
(73) Patentinhaber: Voith Turbo GmbH & Co. KG, 89522 Heidenheim (DE)
(72) Erfinder: Vogelsang, Klaus, 74564 Crailsheim (DE); Ott, Helmut, 74564 Crailsheim (DE); Rose, Peter, 89522 Heidenheim (DE); Heilinger, Peter, 74564 Crailsheim (DE)
(74) Vertreter: Dr. Weitzel & Partner

(56) Entgegenhaltungen:
- EP-A- 0 707 140
- DE-A- 1 946 167
- DE-B- 2 150 115
- DE-C- 3 301 560
- DE-C- 3 713 580
- GB-A- 1 464 372
- US-A- 2 750 009
- US-A- 3 051 273
- US-A- 3 720 372

## Beschreibung

Die Erfindung betrifft eine Antriebseinheit mit einem Motor, einem Retarder und einer Pumpe. Eine solche Antriebseinheit ist aus DE 37 13 580 C1 bekannt geworden.

Bei dieser bekannten Antriebseinheit dient der Retarder dazu, im Kühlmittelkreislauf das Kühlmittel der Fahrzeug-Kühlanlage sowohl im normalen Traktionsbetrieb als auch im Dauerbremsbetrieb umzuwälzen ("Wasserpumpen-Retarder"). Dabei wird dieser Retarder durch eine geeignete Ventilanordnung derart gesteuert, daß er im Bedarfsfalle auch Bremsarbeit leisten kann. Bei der Funktion "Pumpen" soll die Leistungsaufnahme möglichst gering sein, während sie bei der Funktion "Bremsen" möglichst hoch sein soll. Die technischen Anforderungen sind somit sehr gegensätzlich. Dies führt dazu, daß die Funktion "Pumpen" nicht effektiv genug arbeitet, weil nämlich hierbei zu viel Leistung aufgenommen wird.

Trennt man hingegen die beiden Funktionen baulich, indem man außer dem Retarder eine separate Pumpe vorsieht, so lassen sich zwar Retarder und Pumpe derart auslegen, daß die Funktionen optimal erfüllt werden. Jedoch hat ein solches System einen hohen Raumbedarf. Dies ist nachteilig, da der Raum in Fahrzeugen gerade an der betreffenden Stelle sehr beengt ist.

Der Vollständigkeit halber sollen noch die folgenden Dokumente erwähnt werden:

Der aus der US 3 720 372 bekannte Retarder ist mit dem Antriebsmotor integriert, dauernd mit der Kurbelwelle verbunden und stets vom Kühlmittel der Kühleinrichtung durchströmt. Dabei dient der Rotor des Retarders als Umwälzpumpe anstelle einer gesonderten Kühlmittelpumpe. Der Zweck dieser Einrichtung besteht darin, mittels des Retarders das Kühlmittel aufzuheizen, um den Fahrgast-Innenraum zu erwärmen. Diesem Zweck dient auch eine am Retarder angeordnete Steuereinrichtung, die lediglich die Verteilung des Kühlmittels in Abhängigkeit von dessen Temperatur in einer Bypaß-Leitung durch den Kühler leitet.

Aus der DE 33 01 560 C ist ferner ein Retarder bekannt, der über eine schaltbare Kupplung mit der Kurbelwelle des Antriebsmotors und den Treibrädem des Fahrzeuges verbunden ist. Die Aufgabe des Retarders ist jedoch nicht die Aufnahme und Umsetzung hoher kinetischer Bremsenergie des Fahrzeuges in Wärme. Der Retarder wird ausschließlich als Heizgerät betrieben, wobei die Heizleistung unter Berücksichtigung einer zur Verfügung stehenden Antriebsleistung gesteuert werden soll. Das Kühlmittel des Motors ist gleichzeitig die Betriebsflüssigkeit des Retarders.

Ein aus der DE-AS 1 946 167 bekannter Retarder ist direkt mit der Kurbelwelle einer Verbrennungskraftmaschine verbunden, deren Kühlmittel auch als Betriebsflüssigkeit für den Retarder dient. Der Vorteil dieser Betriebsweise liegt darin, daß die anfallende Wärme unmittelbar in dem dem Kühler zugeleiteten Kühlmittel entwickelt wird und ein Wärmetauscher zwischen zwei Flüssigkeiten entbehrlich ist.

EP 0 707 140 beschreibt eine Antriebseinheit mit einem Motor und einem hydrodynamischen Retarder. Dabei ist zum Fördern des Kühlmittels ein Pumpenlaufrad vorgesehen, das axial zum Rotorschaufelrad des Retarders angeordnet ist.

Bei den bisher bekannten Retardem tritt im Nicht-Bremsbetrieb eine gewisse Verlustleistung auf. Der Retarder-Arbeitsraum enthält nämlich im Nicht-Bremsbetrieb einen Rest des Arbeitsmediums. Dies führt zu Ventilationsverlusten und Erwärmung.

Die US 4 836 341 zeigt ein Kontrollsystem für einen hydraulischen Öl-Retarder. Im Bremsbetrieb wird der Retarder über eine Einlaßleitung mit einem Steuerventil gefüllt. Um die Ventilationsverluste im Nicht-Bremsbetrieb gering zu halten, wird der Retarder im Nicht-Bremsbetrieb über eine Evakuierungsleitung mit einem Steuerventil mittels einer Pumpe entleert.

GB-A-1 464 372 offenbart eine Antriebseinheit nach dem Oberbegriff des Anspruchs 1.

Der Erfindung liegt die Aufgabe zugrunde, eine Antriebseinheit der eingangs beschriebenen Art derart zu gestalten, daß Ventilationsverluste weitgehend vermieden werden, daß der Retarder im Bremsbetrieb optimal arbeitet, und daß der Aufbau möglichst einfach wird, so daß die Herstellungskosten gesenkt werden können.

Diese Aufgabe wird durch die Merkmale von Anspruch 1 gelöst.

Beim Bremsbetrieb, wenn der Retarder gefüllt werden muß, wird das Ventil in eine solche Stellung gebracht, daß die erste Leitung geöffnet ist, so daß eine leitende Verbindung zwischen dem Arbeitsmediumbehälter und dem hydrodynamischen Zentrum des Retarders hergestellt ist. Gleichzeitig ist in dieser Stellung des Ventils die dritte Leitung, die sogenannte Leckageleitung, gesperrt. Wird das Ventil in die genannte Stellung gebracht, so kann der Retarder sofort sehr rasch mit der notwendigen Menge des Arbeitsmediums gefüllt werden, so daß die Bremswirkung ebenso schnell eintreten kann.

Im Nicht-Bremsbetrieb ist die erste Leitung abgesperrt, d.h. die leitende Verbindung zwischen Arbeitsmedium und Retarder unterbrochen. Die dritte Leitung, die Leckageleitung, ist jedoch für freien Durchfluß geöffnet. Da die erste Leitung im hydrodynamischen Zentrum des Retarders mündet, in dem ein Unterdruck herrscht, wird die erste Leitung evakuiert. Aus dem hydrodynamischen Zentrum bzw. aus dem gesamten Retarder-Arbeitsraum wird fast die gesamte Menge an Arbeitsmedium entfernt. Deswegen wird die Verlustleistung während des Pumpbetriebes oder Nicht-Bremsbetriebes auf ein Minimum reduziert.

Die Erfindung ist anhand der Zeichnung näher erläutert. Darin ist im einzelnen folgendes dargestellt:

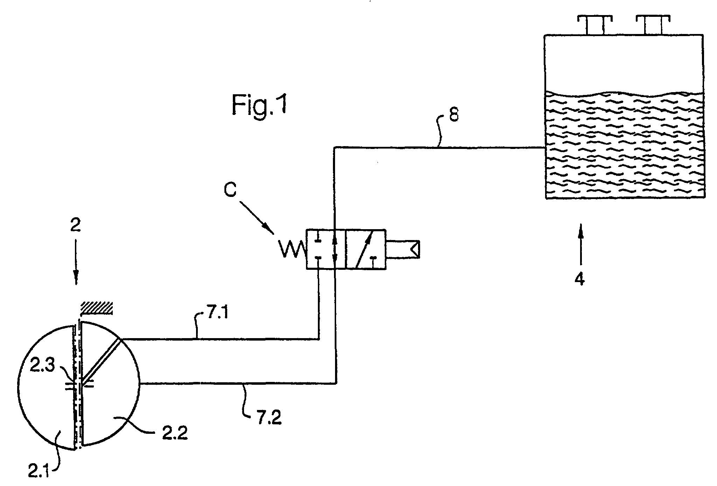

- Fig. 1: zeigt ein Bremssystem in schematischer Darstellung;

Wie in Fig. 1 dargestellt, umfaßt das Bremssystem die folgenden, wichtigsten Elemente:
einen Retarder 2, einen Arbeitsmediumbehälter 4, ein Ventil A und ein Ventil B. Der Retarder 2 weist einen Rotor 2.1 und einen Stator 2.2 auf. Diese beiden bilden einen Arbeitsraum mit einem hydrodynamischen Zentrum 2.3.

Eine Leitung 7.1 verbindet das hydrodynamische Zentrum 2.3 mit dem Ventil C. Eine weitere Leitung 8 verbindet das Ventil C mit dem Arbeitsmediumbehälter 4, und eine dritte Leitung verbindet das Ventil C wieder mit dem Retarder 2.

Die Leitungen 7.1 und 7.2 sind innerhalb des Ventiles C zusammengeschaltet. Von Ventil C aus führt die Leitung 8 zum Arbeitsmedium-Behälter 4. Die Leitung 8 mündet dort unter dem Flüssigkeitsspiegel des Arbeitsmedium-Behälters 4.

Beim Nicht-Bremsbetrieb, dem sogenannten Pumpbetrieb, soll nach Möglichkeit alles Arbeitsmedium aus dem Kreislauf des Retarders 2 entfernt werden. Dies ist der hier dargestellte Betrieb. Umschaltventil 7 befindet sich hierbei in einer solchen Stellung, daß keine leitende Verbindung zwischen dem Arbeitsmedium-Behälter 4 und dem hydrodynamischen Zentrum des Retarders 2 besteht. Es kann daher auch kein Arbeitsmedium zum hydrodynamischen Zentrum des Retarders 2 über diese Leitung strömen. Im hydrodynamischen Zentrum des Retarders 2 bildet sich aber ein Unterdruck, so daß das Arbeitsmedium aus dem Arbeitsraum des Retarders 2 bis auf einen letzten Rest entfernt wird.

Im Nicht-Bremsbetrieb befindet sich im Arbeitsraum des Retarders 2 ein Rest an Arbeitsmedium. Dieses erwärmt sich und muß daher gekühlt werden. Zu diesem Zweck wird mittels Leitung 7.2 eine definierte Arbeitsmediummenge als Wärmeträger über Ventil C zum Arbeitsmediumbehälter 4 geleitet. Die Strömungswiderstände des Leitungssystemes sollten besonders niedrig sein, um eine verlustarme Abführung des Arbeitsmediums zu gewährleisten.

Beim Bremsbetrieb hingegen wird Ventil C mittels eines Ventilantriebes derart geschaltet, daß eine leitende Verbindung zwischen dem Arbeitsmedium-Behälter 4 und dem Retarder 2 über die Leitungen 8 und 7.1 hergestellt wird. Das Bremsmoment soll reproduzierbar und optimal regelbar sein. Wichtig hierfür ist, daß zwischen dem Arbeitsraum des Retarders 2 und dem Arbeitsmedium-Behälter 4 ein Potentialausgleich hergestellt wird. Dies erfolgt durch die dann gegebene Stellung des Ventils C.

Ein weiterer, vorteilhafter Effekt von Ventil C besteht in der Vermeidung von Sekundärkreisläufen beim Bremsbetrieb. Im dargestellten Ausführungsbeispiel wird zum Umschalten von Ventil C eine pneumatische Steuerleitung eingesetzt.

Selbstverständlich sind auch andere Schaltelemente denkbar, beispielsweise hydraulisch oder elektrisch gesteuerte Aggregate.

## Patentansprüche

1. Antriebseinheit;
1.1 mit einem hydrodynamischen Wasserpumpen-Retarder (2);
1.2 der Retarder (2) umfaßt ein Rotorschaufelrad (2.1), ein Statorschaufelrad (2.2) sowie ein diese beiden umschließendes Gehäuse;
1.3 mit einem Kühlmittelkreislauf für eine Brennkraftmaschine, dessen Kühlmittel zugleich Arbeitsmedium des Retarders ist;
1.4 es ist ein Arbeitsmediumbehälter (4) vorgesehen;
1.5 das hydrodynamische Zentrum (2.3) des Retarders (2) ist mittels einer ersten Leitung (7.1) mit einem Ventil (C) verbunden;
1.6 zwischen dem Ventil (C) und dem Arbeitsmediumbehälter (4) ist eine zweite Leitung (8) vorgesehen;
1.7 das Ventil (C) ist derart gechaltet, daß in einer ersten Position -im Pumpbetrieb- eine leitende Verbindung zwischen dem Arbeitsmedium-Auslaß des Retarders (2) und dem Arbeitsmediumbehälter (4) zwecks Abfuhr von Arbeitsmedium als Wärmeträger, und in einer zweiten Position -im bremsbetrieb- eine leitende Verbindung zwischen dem Arbeitsmediumbehäfter (4) und der ersten Leitung (7.1) hergestellt wird,
**dadurch gekennzeichnet, daß** das Ventil (C) ein 3/2-Wege-Ventil ist, wobei zwischen dem Arbeitsmedium-Auslaß des Retarders (2) und dem Ventil (C) eine dritte Leitung (7.2) als Leckageleitung vorgesehen ist.

2. Antriebseinheit nach Anspruch 1, **dadurch gekennzeichnet, daß** das Ventil (C) hydraulisch betätigbar ist.

## Claims

1. A drive unit;
1.1 with a hydrodynamic water pump retarder (2);
1.2 with the retarder (2) comprising a rotor blade wheel (2.1), a stator blade wheel (2.2) as well as a housing enclosing the two;
1.3 with a coolant circulation for an internal combustion engine whose coolant is at the same time the working medium of the retarder;
1.4 with a working medium reservoir (4) being provided;
1.5 with the hydrodynamic center (2.3) of the retarder (2) being connected by means of a first line (7.1) with a valve (C);
1.6 with a second line (8) being provided between the valve (C) and the working medium reservoir (4);
1.7 with the valve (C) being switched in such a way that in a first position during the operation of the pump a first conductive connection is produced between the working medium reservoir (4) and the working medium outlet of the retarder (2) for the purpose of discharging working medium as heat carrier and in a second position during braking operation a conductive connection is produced between the working medium reservoir (4) and the first line (7.1),
**characterized in that** the valve (C) is a 3/2-way valve, with a third line (7.2) being provided as leakage line between the working medium outlet of the retarded (2) and the valve (C).

2. A drive unit as claimed in claim 1, **characterized in that** the valve (C) can be actuated hydraulically.

## Revendications

1. Unité d'entraînement
1.1 comportant un retardateur à pompe à eau hydrodynamique (2),
1.2 lequel retardateur (2) comprend une roue à aubes mobile (2.1), une roue à aubes fixe (2.2) ainsi qu'un logement renfermant celles-ci,
1.3 avec un circuit de fluide de refroidissement pour une machine à combustion, lequel fluide de refroidissement est en même temps le fluide moteur du retardateur,
1.4 dans laquelle il est prévu un réservoir de fluide moteur (4),
1.5 le centre hydrodynamique (2.3) du retardateur (2) est relié à une vanne (C) au moyen d'une première conduite (7.1),
1.6 il est prévu entre la vanne (C) et le réservoir de fluide moteur (4) une deuxième conduite (8),
1.7 la vanne (C) est conformée de telle sorte que dans une première position (mode de pompage) il se crée une communication entre le réservoir de fluide moteur (4) et la sortie de fluide moteur du retardateur (2) afin de permettre l'évacuation du fluide moteur servant de fluide caloporteur, et dans une deuxième position (mode de freinage) il se crée une communication entre le réservoir de fluide moteur (4) et la première conduite (7.1),
**caractérisée en ce que** la vanne (C) est une vanne à 3/2 voies, une troisième conduite (7.2) étant prévue entre la sortie de fluide moteur du retardateur (2) et la vanne (C) pour servir de conduite de fuite.

2. Unité d'entraînement selon la revendication 1, **caractérisée en ce que** la vanne (C) peut être actionnée par un moyen hydraulique.
